# EUROPEAN PATENT APPLICATION

(11) **EP 2 570 591 A2**
(43) Date of publication of application: **20.03.2013**
(21) Application number: 12176637.2
(22) Date of filing: 17.07.2012
(51) Int. Cl.: F01D 5/00, F01D 5/28, C04B 35/80

(54) **Method for repairing a ceramic fiber reinforced ceramic composite article and corresponding intermediate**

(30) Priority: 22.07.2011 US 201113188755
(71) Applicant: General Electric Company, Schenectady, NY 12345 (US)
(72) Inventor: Roberts, Herbert Chidsey III, Greenville, SC 29615 (US); Monaghan, Philip Harold, Newark, DE 19713 (US); Gray Paul Edward, Newark, DE 19713 (US); Boy, Jeffrey H., Newark, DE 19713 (US); Halada, Joseph, Newark, DE 19713 (US); Matsumoto, Roger Lee Ken, Newark, DE 19713 (US)
(74) Representative: Cleary, Fidelma

(57) **Abstract**

Methods for repairing a turbine airfoil (24) constructed from a CMC material are provided via filling a cavity (26) located in the turbine airfoil (24) with a ceramic paste (50) (e.g., including a ceramic powder and a binder), heating the ceramic paste (50) in the cavity (26) to remove the binder, thereby forming a porous ceramic material, and adding a molten ceramic material to the porous ceramic material. The cavity (26) can be defined in an airfoil (30) of the turbine airfoil (24) (e.g., on a tip or cap (36) of the airfoil (30)). Intermediates formed during the repair of a turbine airfoil (24) are also provided. The intermediate can generally include an airfoil (30) comprising a CMC material, a cavity (26) defmed in the airfoil (30), and a porous ceramic material (52) filling the cavity (26).

## Description

### FIELD OF THE INVENTION

The present subject matter relates generally to repairing tips or caps for turbine airfoils and, more particularly, to a ceramic-based tip or cap repair for a turbine airfoil.

### BACKGROUND OF THE INVENTION

In a gas turbine, air is pressurized by a compressor and then mixed with fuel and ignited within an annular array of combustors to generate hot gases of combustion. The hot gases flow from each combustor through a transition piece for flow along an annular hot gas path. Turbine stages are typically disposed along the hot gas path such that the hot gases flow through first-stage nozzles and airfoils and through the nozzles and airfoils of follow-on turbine stages. The turbine airfoils may be secured to a structural case or a plurality of rotor disks comprising the turbine rotor, with each rotor disk being mounted to the rotor shaft for rotation therewith.

A turbine airfoil generally includes an airfoil extending radially outwardly from a substantially planar platform and an attachment portion extending radially inwardly from the platform for securing the airfoil to one of the rotor disks. Certain airfoils can be composed of ceramic and ceramic matrix composite (CMC) materials for operation in a high temperature environment as exist in gas turbines. After the airfoil is put into service, however, the tip or cap of the rotating CMC airfoil can experience localized damage as the tip or cap comes into contact with a gas turbine shroud or due to foreign object damage. The damage to the CMC airfoil can lead to secondary damage if the CMC or ceramic fibers are exposed to the moisture or other contaminates in the gas turbine hot gas path steam.

As such, methods would be welcomed for repairing damage to a CMC airfoil, especially on the tip or cap to extend the working life of the airfoil.

### BRIEF DESCRIPTION OF THE INVENTION

Aspects and advantages of the invention will be set forth in part in the following description, or may be obvious from the description, or may be learned through practice of the invention.

The invention resides in methods for repairing an article constructed from a CMC material. According to one aspect, a cavity located in the article can be filled with a ceramic paste (e.g., including a ceramic powder and a binder). The ceramic paste in the cavity can then be heated to remove the binder, thereby forming a porous ceramic material. A molten ceramic material can then be added to the porous ceramic material. In one particular embodiment, the cavity can be defined in an airfoil of the turbine airfoil (e.g., on a tip or cap of the airfoil).

For example, the methods may be used for repairing a tip or cap of an airfoil constructed from a ceramic matrix composite material.

The invention further resides in intermediates formed during the repair of a turbine airfoil. The intermediate can generally include an airfoil comprising a CMC material, a cavity defined in the airfoil, and a porous ceramic material filling the cavity.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a schematic diagram of one embodiment of a gas turbine;
FIG. 2 illustrates a perspective view of one embodiment of a turbine airfoil having a cavity formed in the tip or cap of the airfoil after normal use;
FIG. 3 illustrates filling the cavity in the turbine airfoil shown in FIG. 2 with a ceramic powder mix;
FIG. 4 illustrates an intermediate having the cavity shown in FIG. 2 filled with a porous ceramic material after heating the ceramic powder mix added as shown in FIG. 3; ,
FIG. 5 illustrates filling the porous ceramic material in the cavity shown in FIG. 4 with a molten material; and
FIG. 6 illustrates the turbine airfoil shown in FIG. 2 after repairing the cavity in the tip or cap.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, methods are generally provided for repairing an article (e.g., a tip or cap of an airfoil in a gas turbine), along with the resulting repaired article (e.g., repaired airfoils). In particular, methods are generally provided for repairing articles (e.g., the tip or cap of an airfoil) constructed from ceramic matrix composite (CMC) material, along with the resulting repaired article (e.g., airfoils). Though discussed hereinafter with respect to an airfoil, the methods may be broadly applied to any article constructed from a CMC material.

CMC materials used to form the airfoil generally exhibit enhanced high temperature capabilities as compared to conventional metal-based airfoils. As such, the airfoil may reduce or eliminate the need for supplying a cooling medium (e.g., air and the like) to and/or through the tip or cap, thereby increasing the efficiency of the gas turbine. Additionally, because of the low densities of CMC materials, the weight of the tip or cap may be significantly less than conventional metal-based tips or caps, thereby reducing the loads generated by the tip or cap during operation of the gas turbine. In several embodiments of the present subject mater, it should be appreciated that the methods disclosed herein may be designed for retrofit applications and, thus, may be configured to be performed on pre-existing turbine airfoils.

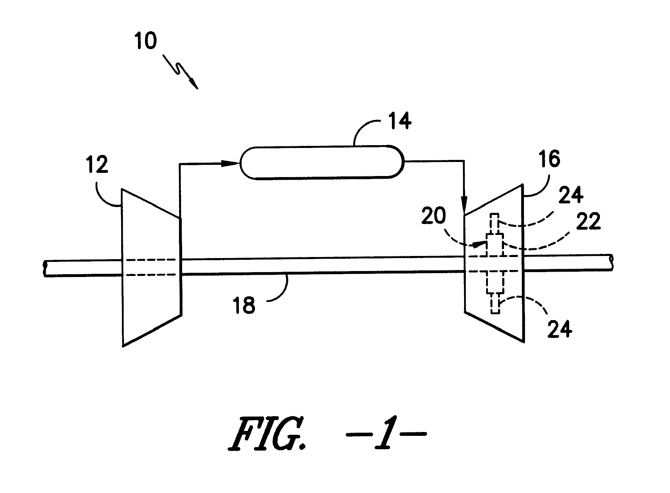

Referring now to the drawings, FIG. 1 illustrates a schematic diagram of a gas turbine 10. The gas turbine 10 generally includes a compressor section 12, a combustor section 14 disposed downstream of the compressor section 12, and a turbine section 16 disposed downstream of the combustor section 14. Additionally, the gas turbine 10 may include a shaft 18 coupled between the compressor section 12 and the turbine section 16. The turbine section 16 may generally include a turbine rotor 20 having a plurality of structural cases 22 (one of which is shown) and a plurality of turbine airfoil 24 extending radially outwardly from and being coupled to each structural case 22 for rotation therewith. Each structural case 22 may, in turn, be coupled to a portion of the shaft 18 extending through the turbine section 16.

During operation of the gas turbine 10, the compressor section 12 pressurizes air entering the gas turbine 10 and supplies the pressurized air to the combustors of the combustor section 14. The pressurized air is mixed with fuel and burned within each combustor to produce hot gases of combustion. The hot gases of combustion flow in a hot gas path from the combustor section 14 to the turbine section 16, wherein energy is extracted from the hot gases by the turbine airfoils 24. The energy extracted by the turbine airfoils 24 is used to rotate the structural cases 22 which may, in turn, rotate the shaft 18. The mechanical rotational energy may then be used to power the compressor section 12 and generate electricity.

It should be understood, however, that the present disclosure is not limited to use in structural cases 22 in the turbine section 16 of a turbine system 10. Rather, the structural cases 22 and/or turbine airfoils 24 may be utilized in conjunction with any suitable section of the turbine system 10. For example, the structural cases 22 and/or turbine airfoils 24 may, in exemplary embodiments, be utilized in the compressor 12.

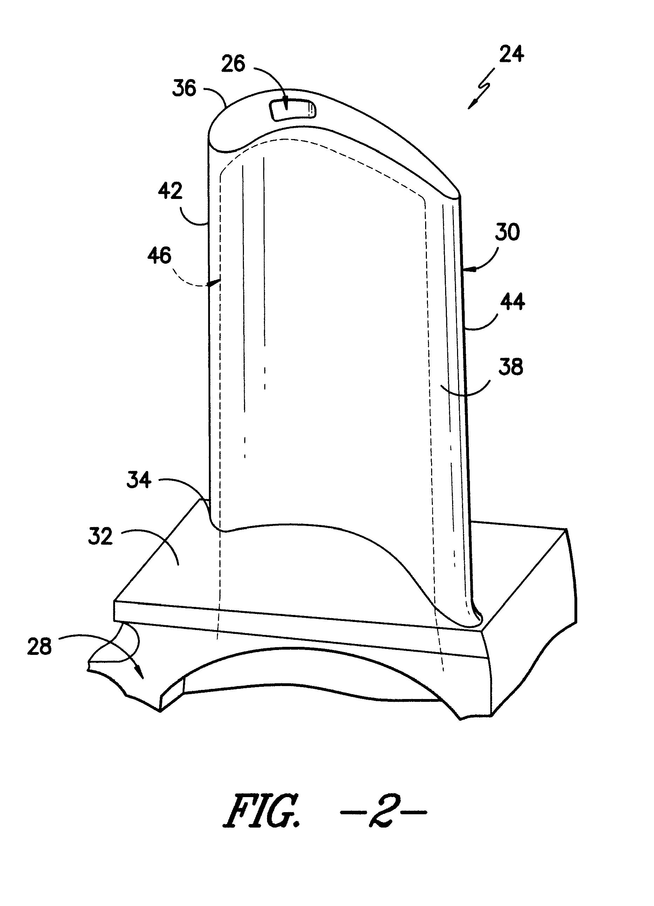

FIGS. 2-6 sequentially show an exemplary method of repairing a tip or cap 36 of an airfoil 30 of a turbine airfoil24.Generally, the turbine airfoil 24 includes an attachment portion 28 and an airfoil 30 extending from a substantially planar platform 32. The platform 32 generally serves as the radially inward boundary for the hot gases of combustion flowing through the turbine section 16 of the gas turbine 10 (FIG. 1). The attachment portion 28 may generally be configured to extend radially inwardly from the platform 32 and may include a root structure (not shown), such as a dovetail, configured to secure the airfoil 23 to the structural case 22 of the gas turbine 10 (FIG. 1).

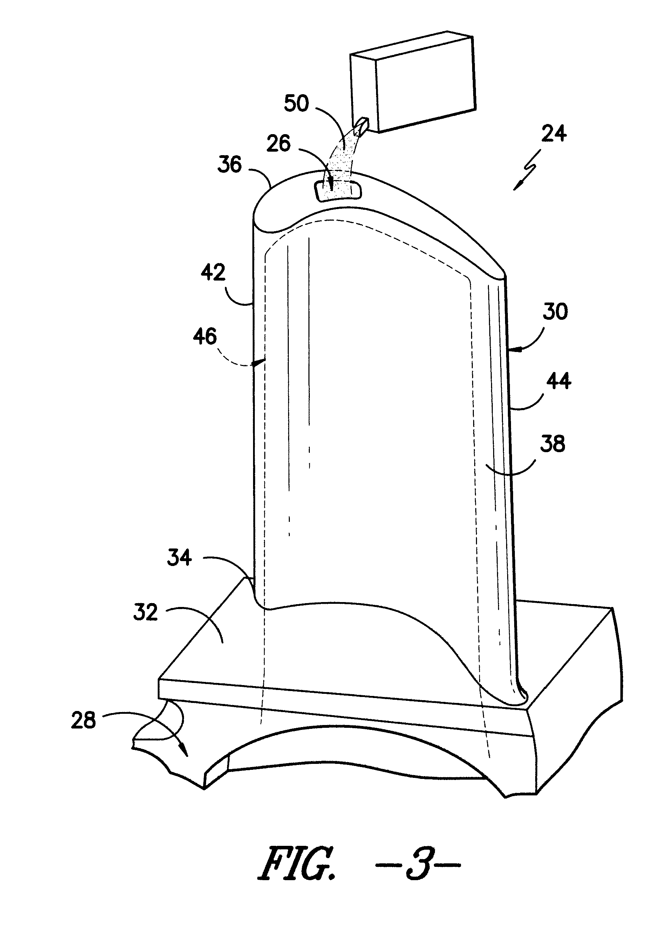

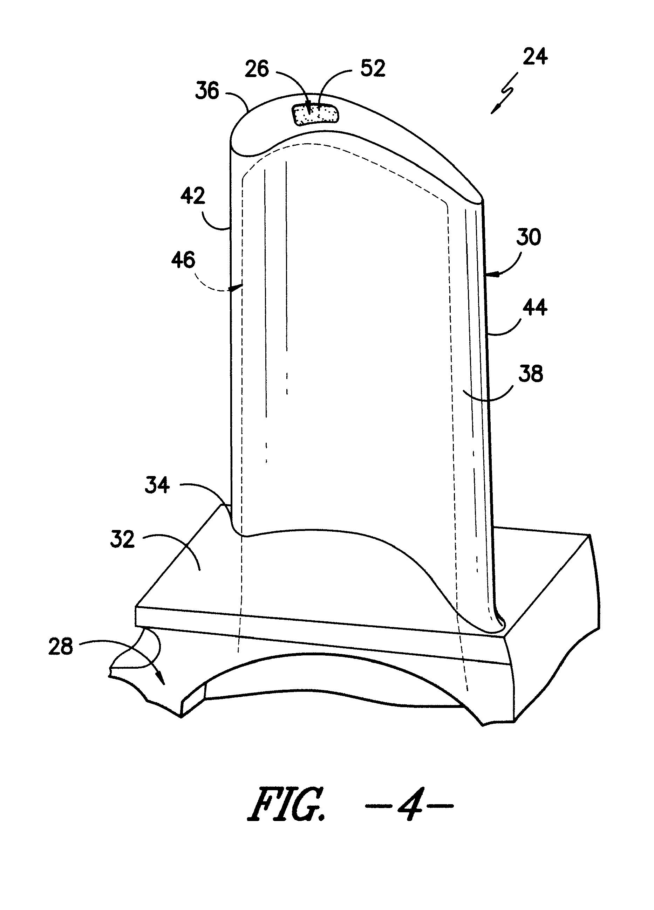

The airfoil 30 may generally extend radially outwardly from the platform 32 and may include an airfoil base 34 disposed at the platform 32 and an airfoil tip or cap 36 disposed opposite the airfoil base 34. Thus, the airfoil tip or cap 36 may generally define the radially outermost portion of the turbine airfoil 24. The airfoil 30 may also include a pressure side wall 38 and a suction side wall 40 (FIGS. 3 and 4) extending between a leading edge 42 and a trailing edge 44. The pressure side wall 38 may generally comprise an aerodynamic, concave outer wall of the airfoil 30. Similarly, the suction side wall 40 may generally define an aerodynamic, convex outer wall of the airfoil 30.

Additionally, the turbine airfoil 24 may also include an airfoil cooling circuit 46 extending radially outwardly from the attachment portion 28 for flowing a cooling medium, such as air, water, steam or any other suitable fluid, throughout the airfoil 30. The airfoil cooling circuit 46 may generally have any suitable configuration known in the art. Thus, in several embodiments, the cooling circuit 46 may include a plurality of cooling channels or passages 48 (one of which is shown in the cross-sectional view of FIG. 4) extending radially within the airfoil 30, such as from the airfoil base 34 to a location generally adjacent the airfoil tip or cap 36. For example, in one embodiment, the airfoil cooling circuit 46 may be configured as a multiple-pass cooling circuit, with the cooling passages 48 being interconnected and extending radially inward and radially outward within the airfoil 30 (e.g., in a serpentine-like path) such that the cooling medium within the passages 48 flows alternately radially outwardly and radially inwardly throughout the airfoil 30.

It should be appreciated that the various components of the turbine airfoil 24 (e.g., the airfoil 30, platform 32 and attachment portion 28) may generally be formed from a ceramic matrix composite (CMC) material. In general, the CMC material used to form the turbine airfoil 24 may comprise any suitable CMC material known in the art and, thus, may generally include a ceramic matrix having a suitable reinforcing material incorporated therein to enhance the material's properties (e.g., the material strength and/or the thermo-physical properties). In several embodiments, the CMC material used may be configured as a continuous fiber reinforced CMC material. For example, suitable continuous fiber reinforced CMC materials may include, but are not limited to, CMC materials reinforced with continuous carbon fibers, oxide fibers, silicon carbide monofilament fibers or other CMC materials including continuous fiber lay-ups and/or woven fiber performs. In other embodiments, the CMC material used may be configured as a discontinuous reinforced CMC material. For instance, suitable discontinuous reinforced CMC materials may include, but are not limited to, particulate, platelet, whisker, discontinuous fiber, in situ and nano-composite reinforced CMC materials or mixtures thereof. Moreover, it should be appreciated that the disclosed turbine airfoil 24 may be formed from the CMC material using any suitable manufacturing process known in the art. For example, suitable manufacturing processes may include, but are not limited to, injection molding, slip casting, tape casting, infiltration methods (e.g., chemical vapor infiltration, melt infiltration and/or the like) and various other suitable methods and/or processes.

In normal use, defects can be formed in the turbine airfoil 24, and particularly along the airfoil 30. FIG. 2 illustrates a perspective view of the turbine airfoil 24 having a cavity 26, which can be the result of damage to the tip or cap. As used herein, the term "cavity" refers to any hollow space within the turbine airfoil 24 (e.g., in the airfoil), such as an opening, crack, gap, aperture, hole, etc. Such a cavity 26 can be formed on the airfoil 30 through normal use, and generally represents an area where fragments of the original CMC material has been chipped off of the turbine airfoil 24. As shown, the cavity 26 is located on the tip or cap 36 of the airfoil 30, which is an area that is particularly susceptible to such damage; however, cavities on any portion of the turbine airfoil 24 can be repaired according to the present disclosure.

FIG. 3 shows the addition of a ceramic paste 50 into the cavity 26. The ceramic paste 50 can generally be applied at room temperature (i.e., about 20° C to about 25° C) or may be applied at an elevated temperature (e.g., up to about 100° C). In one embodiment, the ceramic paste 50 can fill the cavity 26 completely, and may be shaped in the desired manner to repair the cavity 26.

The ceramic paste 50 generally includes a ceramic powder, a binder, and optionally ceramic fibers. The ceramic powder can include silicon carbide (SiC), silicon dioxide (SiO2), Alumina oxide (Al203), carbon, or mixtures thereof. The binder can include suitable composition configured to hold the ceramic powder (and optional ceramic fibers, if present) together as a paste, and can include but is not limited to, an epoxy binder, a polymeric binder, an adhesive (e.g., glue),silicon dioxide (SiO2), Alumina oxide (A12O3), carbon, boron, or mixtures thereof.

In one particular embodiment, the ceramic paste 50 includes SiC and an epoxy binder. In this embodiment, SiC fibers may or may not be included in the ceramic paste 50 if desired. The SiC fibers, when included, can be coated to prevent absorption by the CMC matrix exposed on the cavity 26. For example, the SiC fibers can be coated with boron (B) or carbon (C) particles, any other suitable particle, or mixtures thereof.

After application into the cavity 26, the ceramic paste 50 can then be heated to remove the binder from the cavity 26, leaving a porous ceramic material 52 in the cavity 26.For example, the ceramic paste 50 in the cavity 26 can be heated to 100° C or greater, such as about 110° C to about 200° C. Heating can be achieved either locally (e.g., heating only the porous ceramic material 52 and the immediate area around the cavity 26) or entirely (e.g., heating the entire airfoil 30 and/or turbine airfoil 24). At these elevated temperatures, the binder in the ceramic paste 50 will begin to decompose, sublimate, and/or evaporate from the ceramic paste 50 to leave only a porous ceramic material 52 in the cavity 26, as shown in FIG. 4. Specifically, FIG. 4 shows an intermediary that includes a porous ceramic material 52 (e.g., substantially free from any binder) within the cavity 26.

The porous ceramic material 52 and cavity 26 can then be further heated to temperatures for receiving a molten ceramic material to fill pores in the porous ceramic material 52, thereby forming a ceramic patch to fill the cavity 26. For example, the porous ceramic material 52 and cavity 26 can be heated (either locally or with the entire airfoil 30 and/or turbine airfoil 24) to temperatures of greater than about 1000° C, such as about 1100° C to about 1500°C.

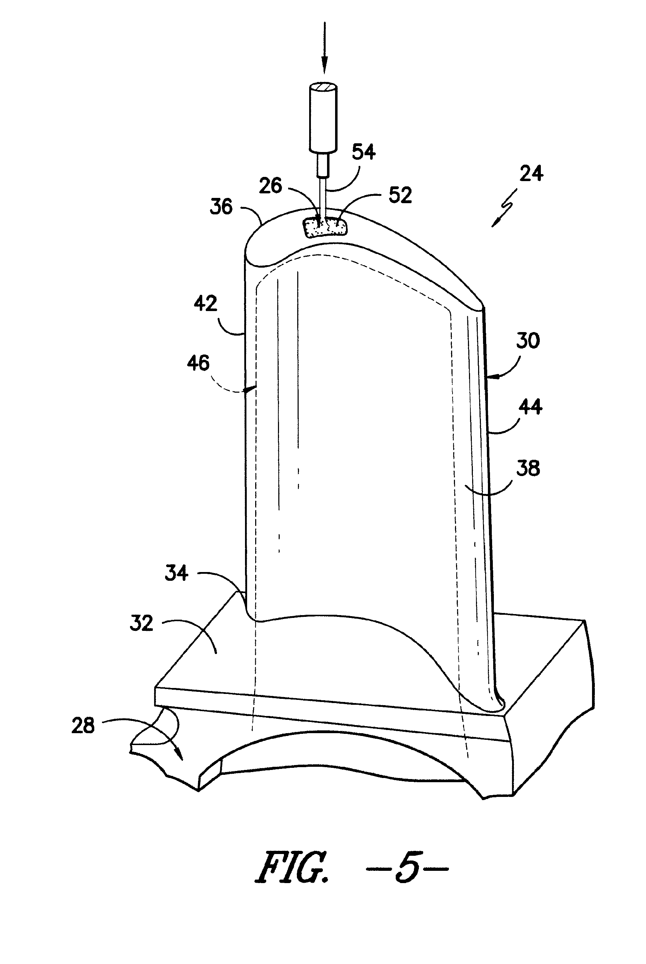

FIG. 5 shows molten ceramic material 54 added to the heated porous ceramic material 52. The molten ceramic material 54 can be added at a temperature that is greater than about 1000° C, such as about 1100° C to about 2000°C. As such, the molten ceramic material 54 can flow and penetrate the pores of the porous ceramic material 52, similar to in melt infusion techniques. Additionally, the molten ceramic material 54 can bond (e.g., thermally, mechanically, chemically, etc.) with the porous ceramic material 52 and/or the CMC material of the turbine airfoil 24 that defines the cavity 26.

The molten ceramic material 54 can generally include ceramic material, such as silicon carbide (SiC), silicon dioxide (SiO2), Alumina oxide (Al2O3), carbon or mixtures thereof. In one embodiment, the molten ceramic material 54 can be substantially pure SiC (e.g., being substantially free from other compounds). As used herein, the term "substantially free" means no more than an insignificant trace amount present and encompasses completely free (e.g., 0 molar % up to 0.0001 molar %).

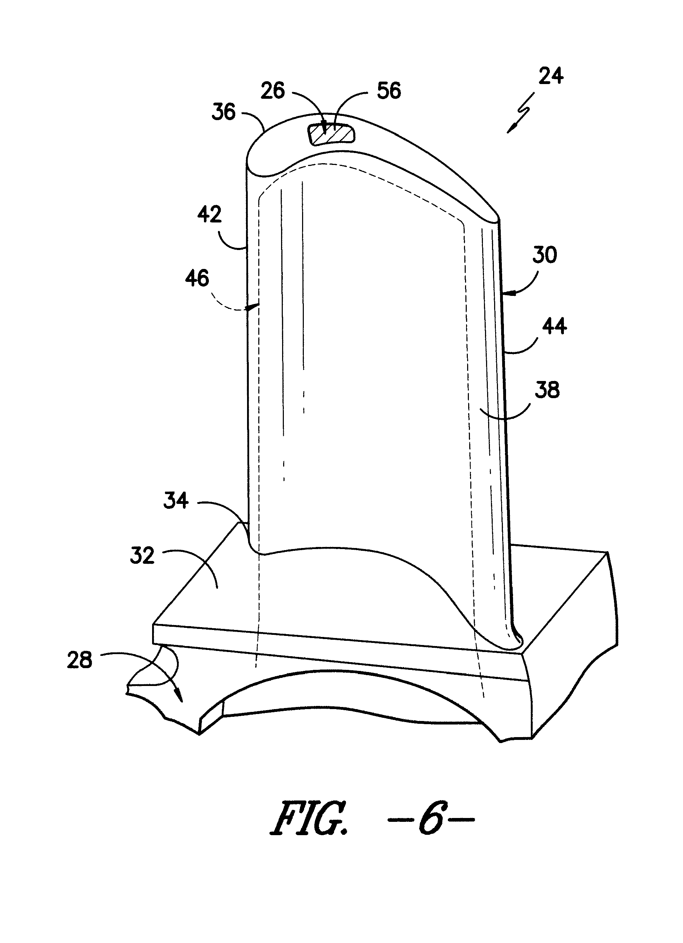

After infusion of the molten ceramic material 54, the cavity 26 (and the rest of the turbine airfoil 24) can be cooled, allowing the porous ceramic material 52 and molten ceramic material 54 to cure and set into a ceramic patch 56 filling the cavity 26 (FIG. 6). As such, the cavity 26 can be filled with CMC material to repair and refurbish the turbine airfoil. The shape of the ceramic patch 56 can be molded as desired either during its formation at any of the above discussed steps or after its formation upon cooling.

As described in greater detail above, one particular embodiment of the method of repairing a turbine airfoil constructed from a CMC material can be summarized as follows: filling a cavity on a CMC turbine airfoil with a ceramic paste, heating the ceramic paste to remove the binder forming a porous structure in the cavity, further heating the porous structure, adding molten material to fill pores in the porous structure, and cooling the molten material and the porous structure to form a ceramic patch in the cavity. Other steps can be included (e.g., shaping the porous structure, shaping the ceramic patch, etc.) in this method as desired.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of repairing an article constructed from a ceramic matrix composite material, the method comprising:
filling a cavity (26) located in the article with a ceramic paste (50), wherein the ceramic paste (50) comprises a ceramic powder and a binder;
heating the ceramic paste (50) in the cavity (26) to remove the binder, thereby forming a porous ceramic material (52); and
adding a molten ceramic material (54) to the porous ceramic material (52).

2. The method of claim 1, wherein the porous ceramic material (52) is heated to about 100° C or higher to remove the binder.

3. The method of claim 1 or 2, wherein the ceramic paste (50) is substantially free from a ceramic fiber.

4. The method of claim 1 or 2, wherein the ceramic paste (50) further comprises a ceramic fiber.

5. The method of claim 4, wherein the ceramic fiber comprises silicon carbide.

6. The method of claim 4 or 5, wherein the ceramic fiber is coated with particles.

7. The method of claim 6, wherein the particles comprise boron, carbon, or mixtures thereof.

8. The method of any preceding claim, further comprising:
heating the porous ceramic material (52) to a temperature of about 1000° C to about 1500° C prior to adding the molten ceramic material (54).

9. The method of any preceding claim, wherein the molten ceramic material (54) is added to the porous ceramic material (52) at a temperature of about 1000° C to about 2000° C.

10. The method of any preceding claim, further comprising, after adding the molten ceramic material (54):
cooling the porous ceramic material (52) and molten ceramic material (54) to form a ceramic patch (56) in the cavity (26).

11. The method of claim 10, further comprising:
shaping the ceramic patch (56).

12. The method of any preceding claim, wherein the molten ceramic material (54) comprises silicon carbide.

13. The method of any preceding claim, wherein heating the porous ceramic material (52) to remove the binder is achieved locally.

14. The method of any preceding claim, wherein the article is a turbine airfoil (24).

15. An intermediate formed during the repair of a turbine airfoil (24), the intermediate comprising:
an air foil (24) comprising a ceramic matrix composite material;
a cavity (26) defined in the airfoil (24); and
a porous ceramic material (52) filling the cavity (26).
